# EUROPEAN PATENT APPLICATION

(11) **EP 4 797 261 A1**
(43) Date of publication of application: **26.08.2026**
(21) Application number: 25159754.8
(22) Date of filing: 24.02.2025
(51) Int. Cl.: G11B 27/031, G11B 27/34, H04N 21/854, G06N 3/02

(54) **INFORMATION PROCESSING APPARATUS, INFORMATION PROCESSING METHOD, INFORMATION PROCESSING SYSTEM, AND PROGRAM FOR GENERATING INFORMATION FOR VIDEO PRODUCTION**

(71) Applicant: Canon Europa N.V., 1185 XB Amstelveen (NL); DENTSU INC., Tokyo 105-7001 (JP)
(72) Inventor: Nakagawa, Kenichi, Uxbridge, UB11 1AF (GB); Matsutake, Yusuke, Uxbridge, UB11 1AF (GB); Aotani, Takaharu, Uxbridge, UB11 1AF (GB); Washio, Kohei, Tokyo, 105-7001 (JP); Major, Zoltán, 15-23 Budapest (HU); Szekeres, Géza, 15-23 Budapest (HU)
(74) Representative: Canon Europe Limited

(57) **Abstract**

An information processing system including an information processing apparatus, and a server apparatus, wherein the server apparatus transmits, to the information processing apparatus, information for video production generated using a first process in a first role, wherein the information processing apparatus includes display control means for displaying the information for video production on a display unit, wherein the display control means displays an instruction section that does not receive text input from a user but receives a review of the information for video production, with the information for video production being displayed on the display unit, the review being generated by a second process in a second role, and the display control means displays an improvement for the information for video production generated using the second process in the second role and the information for video production, based on an instruction.

## Description

### TECHNICAL FIELD

The present embodiment relates to an information processing apparatus for generating information for video production, an information processing method, an information processing system, and a program.

### BACKGROUND

In video production, after a brief to produce a video is generated, a storyline and a storyboard of the video are generated. Generating the brief, the storyline, and the storyboard requires a substantial amount of work.

Japanese Patent Application Laid-Open No. 2023-56121 discusses a method for determining camera work for an object in images of cuts in a storyboard, generating an image based on the determined camera work, and assigning a cut number to the generated image and information related to the cut of the image.

### SUMMARY

The method discussed in Japanese Patent Application Laid-Open No. 2023-56121 is not capable of displaying, with respect to information for video production that has been generated using a first process in a first role, an improvement point for the information for video production that has been generated using a second process in a second role and the information for video production, based on an instruction to an instruction section for receiving a review.

According to the present invention, with respect to information for video production generated using a first process in a first role, an improvement point for the information for video production is able to be suggested using another process with another role, based on an instruction to an instruction section for receiving a review.

The present invention provides the information processing system of claim 1. Optional features are identified in claim 2 to 9.

The present invention provides the information processing system of claim 10.

The present invention provides the information processing system of claim 11.

The present invention provides the information processing system of claim 12. Optional features are identified in claim 13 or 14.

The present invention provides the method for controlling the information processing system of claim 15.

Features of the present disclosure will become apparent from the following description of embodiments (with reference to the attached drawings). The following description of embodiments are described by way of example.

### BRIEF DESCRIPTION OF THE DRAWINGS

Fig. 1 is a diagram illustrating a configuration of a system including an information processing apparatus, an application server, and a generative artificial intelligence (generative AI) server.
Fig. 2 is a diagram illustrating hardware configurations of the information processing apparatus, the application server, and the generative Al server.
Figs. 3A to 3D are diagrams illustrating software configurations of the information processing apparatus and the application server.
Fig. 4 is a flowchart illustrating an overall processing procedure.
Fig. 5 is a sequence diagram illustrating a processing procedure of brief generation.
Fig. 6 is a sequence diagram illustrating a processing procedure of concept generation.
Fig. 7 is a sequence diagram illustrating a processing procedure of storyline generation.
Fig. 8 is a sequence diagram illustrating a processing procedure of image generation.
Fig. 9 is a sequence diagram illustrating a processing procedure of storyboard generation.
Fig. 10 is a diagram illustrating a screen via which a video type is received.
Figs. 11A and 11B are diagrams each illustrating a screen displaying a question.
Figs. 12A and 12B are diagrams each illustrating a screen displaying a brief.
Fig. 13 is a diagram illustrating a screen displaying a plurality of concepts.

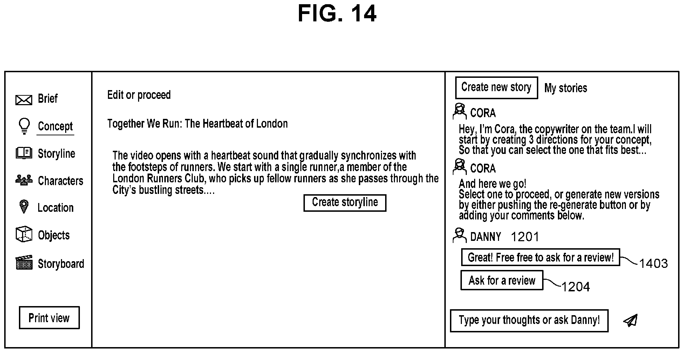

Fig. 14 is a diagram illustrating a screen displaying a selected concept.
Fig. 15 is a diagram illustrating a screen displaying an improvement point for the concept.
Fig. 16 is a diagram illustrating a screen displaying a storyline.
Fig. 17 is a diagram illustrating a screen displaying a character image to be used in a storyboard.
Fig. 18 is a diagram illustrating a screen displaying a location image to be used in a storyboard.
Fig. 19 is a diagram illustrating a screen displaying an object image to be used in a storyboard.
Fig. 20 is a diagram illustrating a screen via which an image generation style and a palette to be used in a storyboard are selected.
Fig. 21 is a diagram illustrating a screen displaying a series of storyboards.
Fig. 22 is a diagram illustrating a flowchart for updating a brief that is performed by the information processing apparatus.
Fig. 23 is a diagram illustrating a flowchart for updating a concept that is performed by the information processing apparatus.
Fig. 24 is a diagram illustrating a flowchart for updating a storyline that is performed by the information processing apparatus.
Fig. 25 is a diagram illustrating a flowchart for updating a storyboard that is performed by the information processing apparatus.

### DESCRIPTION OF THE EMBODIMENTS

An embodiment of the present invention will be described below with reference to the drawings.

### <First Embodiment>

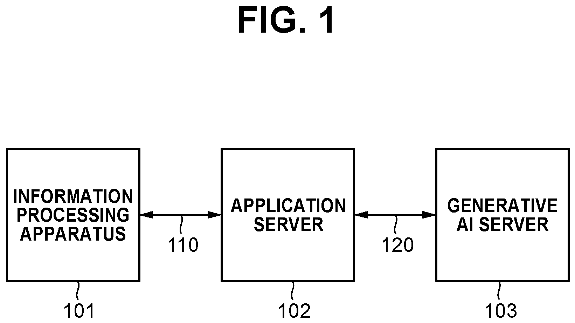

Fig. 1 is a diagram illustrating an entire configuration of a system that generates information for video production according to the present embodiment. In Fig. 1, an information processing apparatus 101 serving as a client and an application server 102 are connected via a network 110. The network 110 is realized by, for example, a local area network (Hereinafter, abbreviated as "LAN"), such as the Internet, a wide area network (hereinafter, abbreviated as "WAN"), a dedicated digital line, an asynchronous transfer mode (ATM) or a frame relay line, a cable television line, or a wireless line for data broadcasting. The network 110 may be of any type as long as it enables data transmission and reception.

The information processing apparatus 101 is an information apparatus with a built-in program execution environment. Examples include a desktop personal computer, a laptop personal computer, a personal data assistant (hereinafter, abbreviated as "PDA"), and a smartphone. The information processing apparatus 101 has a built-in environment to execute a program, such as a web browser (internet browser, a World Wide Web (WWW) browser, software for using the WWW).

An application that generates a brief, a concept, a storyline, and a storyboard is installed on the application server 102. Based on an instruction received from the information processing apparatus 101, the application server 102 generates a storyline (i.e. script outline, plot outline) and a storyboard (i.e. visual script) desired by a user and transmits the generated storyline and the generated storyboard to the information processing apparatus 101.

A generative artificial intelligence (generative AI) server 103 is a server that uses a generative Al to generate an answer based on an instruction in a prompt received from the application server 102. Al herein refers to artificial intelligence, and generative Al refers to Al trained on data patterns and relationships to generate content including text, an image, a moving image, audio, and music, or a combination thereof. The generative Al server 103 includes a plurality of Als each assigned a role. Each Al has a role that is different from the others. By assigning a role to each Al, response style and content of each Al are adopted to its role.

By assigning a role that mimics a specific individual, a specialized role, or a skill to generative Al, the role is assigned to the AI. Specifically, a role is assigned to an Al through a process of clearly defining the role, providing background and context, clarifying a purpose (setting a goal for the AI), and then setting an additional rule (adding an instruction relating to response tone and style). Roles in the present embodiment are, for example, strategist, creative director, and copywriter. Therefore, the roles in the present embodiment are also describable as assumptions, constraints, and other conditions under which the Als generate content to be output based on received input.

There is a plurality of methods for assigning a role to an Al as described below.

First, by changing the content of the prompt, the role of the Al is changed. By carefully designing an instruction or a setting given to the Al, response style and direction of the Al are adjusted. To assign a role to an Al, the application server 102 transmits, to the Al server 103, a prompt including a name of the role, such as strategist, creative director, or copywriter, a description of duties of the role, expertise such as a specialized skill required for the role, a function of the role, or any combination thereof.

Further, there is a case where a setting message (system message) defining "what role is to be fulfilled" is used in an Al system. By adjusting this setting, the behavior of the Al can be changed without changing the prompt.

Further, by simply adding an instruction relating to tone or style, a response as if the role has been changed can be obtained without significantly changing the content of the prompt.

Further, the role of the Al can be changed by switching a preset mode, such as "creative mode" or "accuracy-prioritized mode", without changing the prompt.

The generative Al server 103 may be a data server that consolidates not only generative Al but also information from many storylines and storyboards, or may be a combination of a data server that accumulates storylines, storyboards, and other information about video generation, along with a server equipped with generative Al and other Al functions. While the video in the present embodiment includes both audio and a moving image, the video may be a still image, a moving image, or a combination of still and moving images, and one or more of text, audio, and music may be combined with them. While Fig. 1 illustrates a single application server 102 and a single generative Al server 103 to simplify the description in the present embodiment, it is not intended to limit the number of application servers 102 and generative Al servers 103. Each server may include a plurality of physical server computers, a plurality of virtual server computers, or a combination of both.

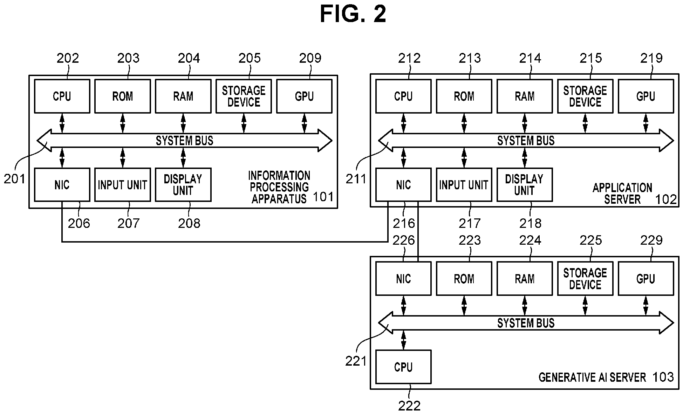

Fig. 2 is a diagram illustrating an example of hardware configurations of the information processing apparatus 101, the application server 102, and the generative Al server 103 in the system that generates information for video production according to the present embodiment. System bus 201 is a system bus that connects each component of the information processing apparatus 101. Central processing unit (CPU) 202 is a central processing unit that controls the entire apparatus and comprehensively controls access to each component connected to the system bus 201.

Read-only memory (ROM) 203 is a read-only memory that is storage means and stores various types of data, such as a basic input/output (I/O) program, therein. Random access memory (RAM) 204 is a random access memory that is temporary storage means and functions as a main memory and a working area for the CPU 202. Storage device 205 is one of external storage means and functions as a large-capacity memory storing a program according to the present embodiment. Examples include a hard disk drive (hereinafter, abbreviated as "HDD").

Network interface controller (NIC) 206 is a network interface controller and performs data exchange with each component illustrated in Fig. 1 via the network 110. An input unit 207 is instruction input means for inputting an instruction via an input device, such as a keyboard (not illustrated) or a mouse (not illustrated). Display unit 208 is display means for displaying via an output device, such as a display (not illustrated). Graphics processing unit (GPU) 209 is a graphics processing unit that performs processing for training for a plurality of iterations using a training model, such as deep learning. By using the GPU 209, the amount of data processable in parallel is increased, which enables efficient computation.

The above-described configuration of the information processing apparatus 101 is merely an example, and the combination illustrated in Fig. 2 is not a limitation. For example, a storage destination of data or a program may be changed to one of the ROM 203, the RAM 204, and the storage device 205, based on its characteristic.

The application server 102 illustrated in Fig. 2 is an example of a hardware configuration of the application server 102.

System bus 211 is a system bus that connects each server component. CPU 212 is a central processing unit that controls the entire apparatus and comprehensively controls access to each component connected to the system bus 211.

ROM 213 is a read-only memory that is storage means and stores various types of data, such as a basic I/O program, therein. RAM 214 is a random access memory that is temporary storage means and functions as a main memory and a working area for the CPU 212. Storage device 215 is one of the external storage means and functions as a large-capacity memory storing a program according to the present embodiment. Examples include an HDD. NIC 216 is a network interface controller and performs data exchange with each component illustrated in Fig. 1 via the network 110.

Input unit 217 is instruction input means for inputting an instruction via an input device, such as a keyboard (not illustrated) or a mouse (not illustrated). GPU 219 is a graphics processing unit that performs processing for training for a plurality of iterations using a training model, such as deep learning. By using the GPU 219, an amount of data processable in parallel is increased, which enables efficient computation. The above-described configuration of the application server 102 is merely an example, and the combination illustrated in Fig. 2 is not a limitation. For example, a storage destination of data or a program may be changed to one of the ROM 213, the RAM 214, and the storage device 215, based on its characteristic.

The generative Al server 103 in Fig. 2 is a diagram illustrating an example of a hardware configuration of the generative Al server 103.

System bus 221 is a system bus that connects each server component. CPU 222 is a central processing unit that controls the entire apparatus and comprehensively controls access to each component connected to the system bus 221.

ROM 223 is a read-only memory that is storage means and stores various types of data, such as a basic I/O program, therein. RAM 224 is a random access memory that is temporary storage means and functions as a main memory and a working area for the CPU 222 and a GPU 229. Storage device 225 is one of the external storage means and functions as a large-capacity memory storing a program according to the present embodiment. Examples include an HDD. NIC 226 is a network interface controller and performs data exchange with each component illustrated in Fig. 1 via a network 120.

The GPU 229 is a graphics processing unit that performs processing for training for a plurality of iterations using a training model, such as deep learning. By using the GPU 229, an amount of data processable in parallel is increased, which enables efficient computation. The above-described configuration of the generative Al server 103 is merely an example, and the combination illustrated in Fig. 2 is not a limitation. For example, a storage destination of data or a program may be changed to one of the ROM 223, the RAM 224, and the storage device 225, based on its characteristic.

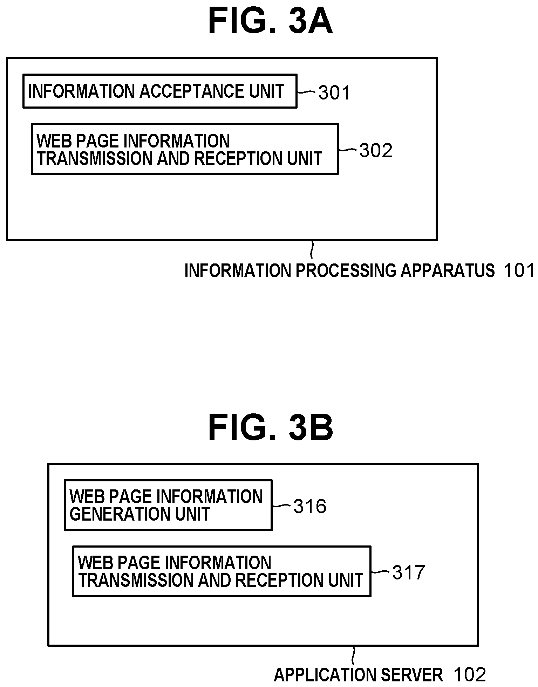

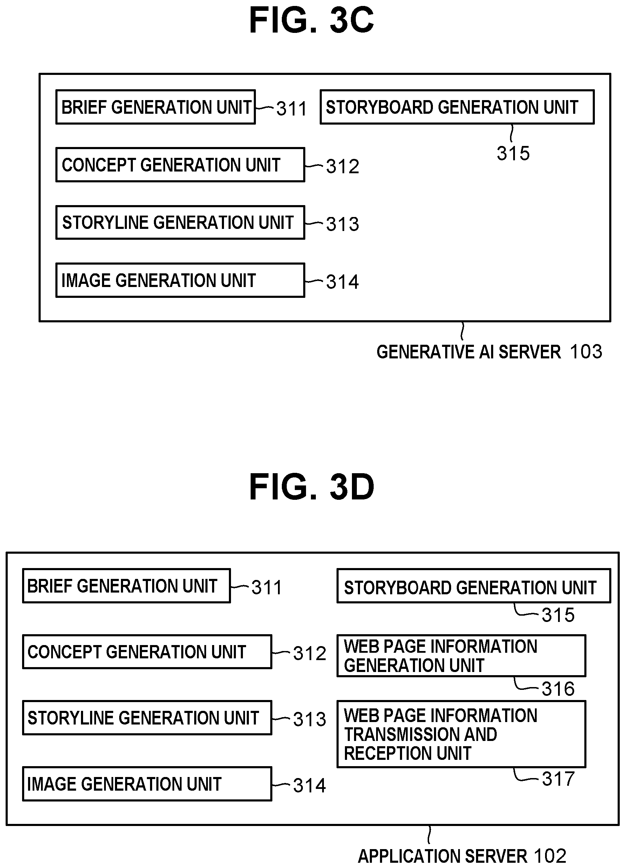

Figs. 3A to 3D are diagrams each illustrating an example of a software configuration of a component of the system that generates information for video production according to the present embodiment. Fig. 3A is a block diagram illustrating a software configuration of the information processing apparatus 101 according to the present embodiment. These software modules are stored as programs in the storage device 205, and the CPU 202 loads the programs into the RAM 204 and executes the loaded programs to realize the software modules.

The information processing apparatus 101 includes an information acceptance unit 301 and a web page information transmission and reception unit 302.

The information acceptance unit 301 receives an instruction from the user via the input unit 207. The web page information transmission and reception unit 302 connects to the application server 102 via the NIC 206 and the network 110 and performs transmission and reception of web page information.

The application server 102 includes a web page information generation unit 316 and a web page information transmission and reception unit 317.

The web page information generation unit 316 generates web page information including at least one of a generated brief, a generated concept, a generated storyline, a generated image, and a generated storyboard.

The web page information transmission and reception unit 317 connects to the information processing apparatus 101 via the NIC 216 and the network 110 and performs transmission and reception of web page information generated by the web page information generation unit 316. The generative Al server 103 includes a brief generation unit 311, a concept generation unit 312, a storyline generation unit 313, an image generation unit 314, and a storyboard generation unit 315.

The brief generation unit 311 generates a question to be used for generation of a brief, based on the received type and length of the video, and generates a brief based on an answer to the generated question.

The concept generation unit 312 generates a plurality of concepts based on the brief generated by the brief generation unit 311, receives an instruction from the user about which concept is to be employed, and determines a concept based on the received instruction.

The storyline generation unit 313 generates a storyline (i.e. script outline, plot outline) based on the concept generated by the concept generation unit 312.

The image generation unit 314 generates an image based on the storyline generated by the storyline generation unit 313.

The storyboard generation unit 315 generates a storyboard (i.e. visual script) based on the storyline generated by the storyline generation unit 313 and the image generated by the image generation unit 314.

The application server 102 may include some of the brief generation unit 311, the concept generation unit 312, the storyline generation unit 313, the image generation unit 314, and the storyboard generation unit 315 and perform some of the processes of the brief generation unit 311 to the storyboard generation unit 315.

The generative Al server 103 includes, for example, an operating system (OS), a programming language compiler/interpreter, a library, a database management system (DBMS), an application programming interface (API), an interface, security software, and a monitoring tool.

The OS manages hardware resources of the server and executes an application. The programming language compiler/interpreter is a compiler or interpreter for a programming language to be used for Al development. The library is a set of various libraries for efficient data processing and numerical calculations. The database management system is a database for management of large amounts of data. The API and the interface receive an external request and return a result.

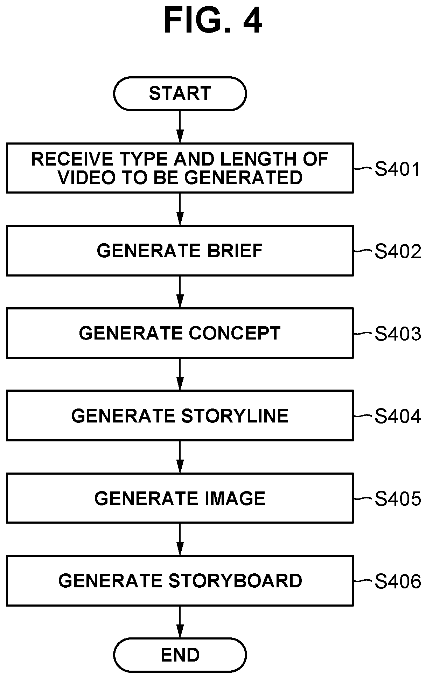

Fig. 4 is a flowchart illustrating an overall processing procedure according to the present embodiment.

Part of the control program for the flowchart illustrated in Fig. 4 is stored in the storage device 205 of the information processing apparatus 101, and the CPU 202 reads the stored program into the RAM 204 and executes the read program. Part of the control program for the flowchart illustrated in Fig. 4 is stored in the storage device 215 of the application server 102, and the CPU 212 reads the stored program into the RAM 214 and executes the read program. Part of the control program for the flowchart illustrated in Fig. 4 is stored in the storage device 225 of the generative Al server 103, and the CPU 222 reads the stored program into the RAM 224 and executes the read program.

In step S401, the information acceptance unit 301 receives, from the user via the input unit 207, the type and length of video to be generated and a message to be conveyed through the video. The video type is received as text and may be any video type, such as educational, sports, or commercial. The video length may be any specified length of time, and a length of time such as 60 seconds is received. As the message to be conveyed through the video, the purpose or subject matter of the video is received. The information acceptance unit 301 also receives an image of an item or character to be used in the video, in addition to text.

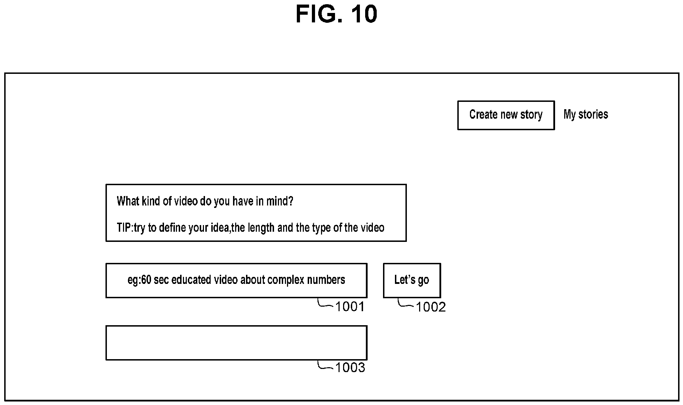

Fig. 10 illustrates an operation screen that is displayed on the display unit 208 of the information processing apparatus 101 and receives the video type in step S401. The video type is input into a reception section 1001 in Fig. 10. By storing a desired image in the storage device 205 of the information processing apparatus 101 and dragging and dropping the image into an area 1003 in Fig. 10, the image can be received. In a case where input to an instruction section 1002 in Fig. 10 is received, the processing proceeds to step S402. The instruction section 1002 is a button displayed on the display unit 208, and input to the instruction section 1002 can be received by clicking the button with a pointing device or using a touch operation or through a predetermined keyboard operation. This type of input can also be received in a similar manner in the following description.

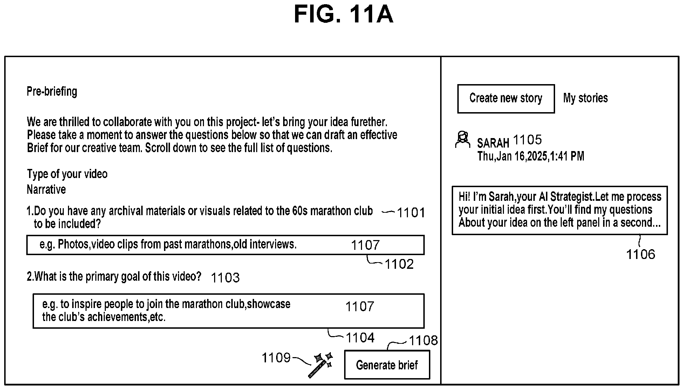

In step S402, the brief generation unit 311 generates a question to be used for generation of a brief in accordance with the type and length of the video received in step S401, and generates a brief based on an answer to the generated question. Fig. 11A illustrates a screen that is displayed on the display unit 208 of the information processing apparatus 101 and on which questions 1101 and 1103 generated in step S402 are displayed. An answer to each question is input into input fields 1102 and 1104 via the input unit 207. The questions 1101 and 1103 displayed in step S402 are determined in accordance with the type of the video received in step S401. Furthermore, an example 1107 of a suggested answer to the question is determined in accordance with the type of the video received in step S401.

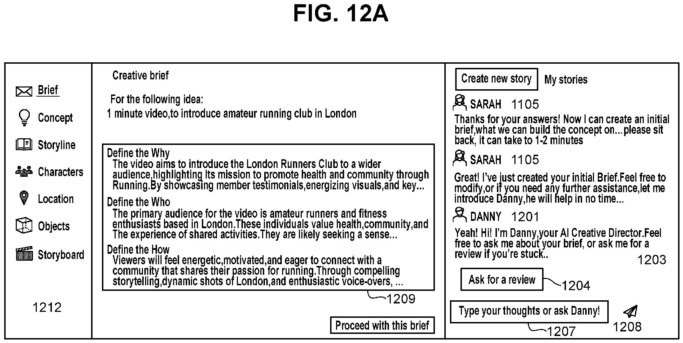

In response to receipt of input to an instruction section 1108 after answers are input into the input fields 1102 and 1104, a brief generation process is initiated, and in response to generation of a brief, a screen in Fig. 12A is displayed. Fig. 12A illustrates a brief generated in step S402 and displayed on the display unit 208. In a case where the user agrees to the brief, input to an instruction section 1210 is received, and the processing proceeds to step S403.

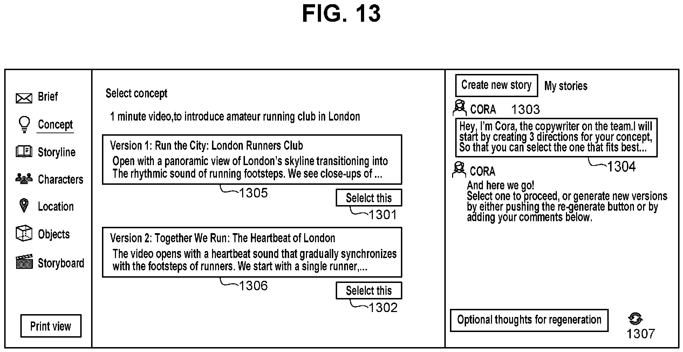

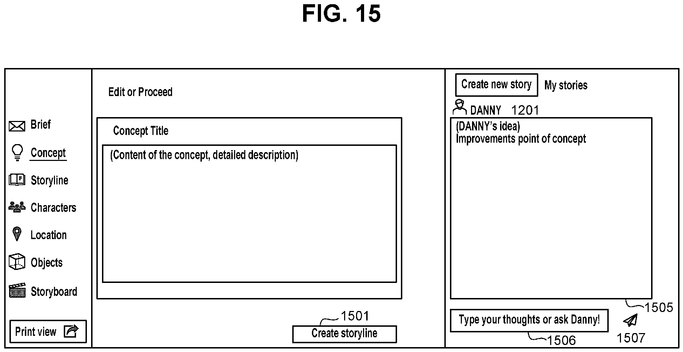

In step S403, the concept generation unit 312 generates a plurality of concepts based on the brief generated in step S402, receives an instruction from the user about which concept is to be employed, and determines a concept based on the received instruction. Fig. 13 illustrates a plurality of concepts generated in step S403 and displayed on the display unit 208. A concept is selected by selecting one of a plurality of instruction sections 1301 and 1302. While Fig. 13 illustrates two instruction sections 1301 and 1302 as an example, there may be three or more concepts and three or more instruction sections. In response to receipt of input to an instruction section 1501 in Fig. 15, the processing proceeds to step S404.

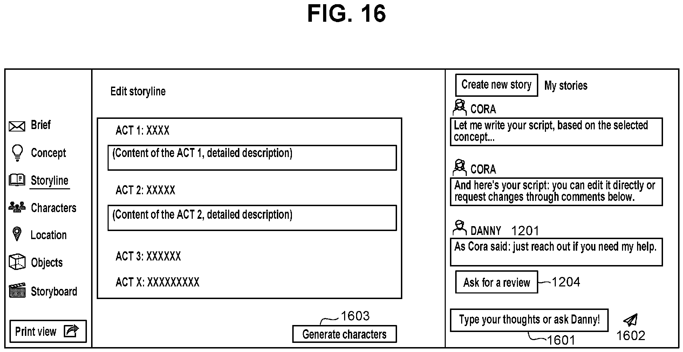

In step S404, the storyline generation unit 313 generates a storyline (i.e. script outline, plot outline) based on the concept determined in step S403. Fig. 16 illustrates a storyline generated in step S404 and displayed on the display unit 208. In response to receipt of input to an instruction section 1603 in Fig. 16, the processing proceeds to step S405.

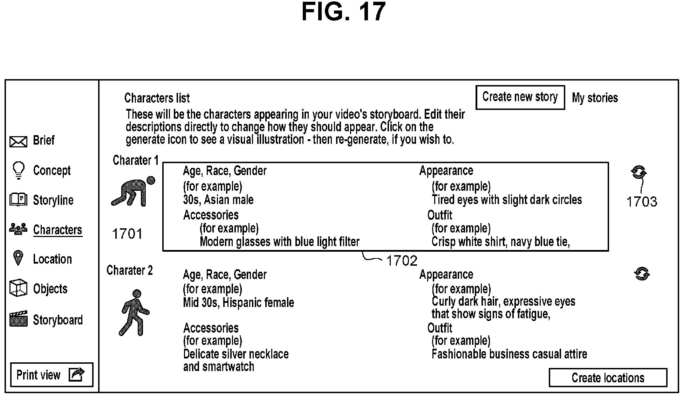

In step S405, the image generation unit 314 generates an image based on the storyline generated in step S404. Fig. 17 illustrates an image generated in step S405 and displayed on the display unit 208.

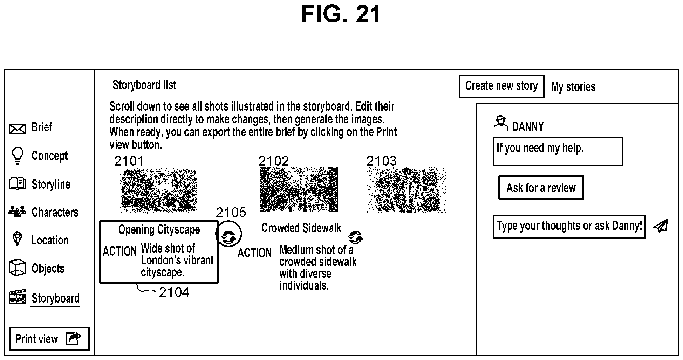

In step S406, the storyboard generation unit 315 generates a storyboard (i.e. visual script) based on the storyline generated in step S404 and the image generated in step S405. Fig. 21 illustrates a storyboard generated in step S406 and displayed on the display unit 208.

The brief, the concept, the storyline, the image, and the storyboard described above are examples of information for video production. Any information is usable as long as the information is for video production.

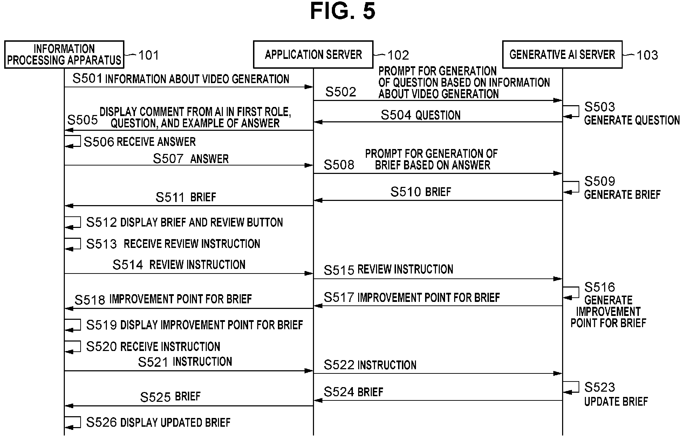

Fig. 5 is a sequence diagram illustrating a processing procedure of the brief generation in step S402.

In step S501, the type and length of the video and the message to be conveyed through the video (information about video generation) received in step S401 are transmitted to the application server 102. In step S502, the application server 102 transmits, to the generative Al server 103, a prompt for generation of a question based on the type and length of the video and the message to be conveyed through the video received in step S501.

In step S503, an Al (Al strategist) 1105 in a first role of the generative Al server 103 generates a question based on the prompt received in step S502. In step S504, the Al 1105 transmits the generated question to the application server 102. The example 1107 of the suggested answer to the question is generated by the Al (Al strategist) 1105 in the first role of the generative Al server 103 in step S503. In this process, the generative Al server 103 generates the example 1107 of the answer based on all or some of the type and length of the video, the message to be conveyed through the video, and other information about video generation transmitted from the information processing apparatus 101 in step S501, the prompt received by the generative Al server 103 in step S502, and the question generated in step S503, and the generative Al server 103 transmits the generated example 1107 to the application server 102 in step S504.

In step S505, the application server 102 generates a web page including the example 1107 of the answer in addition to the question and a comment and transmits the generated web page to the information processing terminal 101. The generative Al server 103 includes a plurality of Als each assigned a role. Each Al has a different role compared to the others.

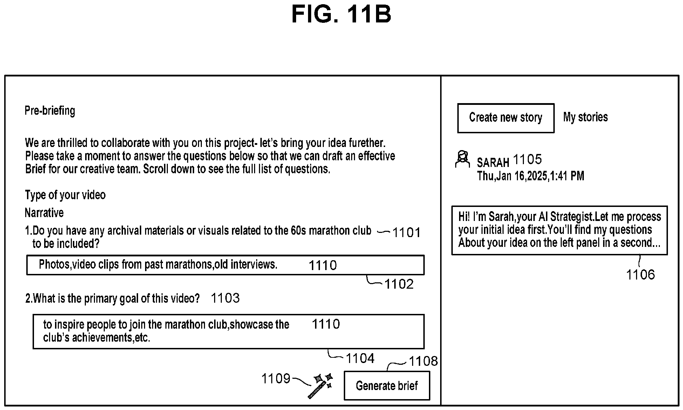

The application server 102 receives, from the generative Al server 103, a plurality of questions (e.g., 1101 and 1103 in Fig. 11) to be used for generation of a brief, and the web page information generation unit 316 generates a web page including the questions and a comment. In step S505, the web page information transmission and reception unit 317 transmits the generated web page to the information processing apparatus 101. The information processing apparatus 101 displays the received web page.

The Al 1105 in the first role is a strategist that defines the overall direction and purpose of the video faithfully based on the input video type and the answer to the question and clarifies the message and concept to be conveyed by the video. The first role can be set by transmitting, from the application server 102 to the Al server 103, a prompt including the name "strategist", a description of duties of the strategist, such as planning and generation, a strategic viewpoint and other expertise required of the strategist, a function of the strategist, or any combination thereof. Such a prompt may be transmitted in step S502 or prior to step S501.

In step S506, the information processing apparatus 101 receives an answer to the question. In step S507, the information processing apparatus 101 transmits the received answer to the application server 102. In the input fields 1102 and 1104 in Fig. 11A, the example 1107 of the suggested answer to the question is displayed based on the video type received in step S401. The example 1107 of the suggested answer to the question is generated by the Al (Al strategist) 1105 in the first role of the generative Al server 103, based on the prompt received in step S502, in accordance with the type and length of the video and the message to be conveyed through the video received in step S501. The user refers to the example 1107 of the answer and inputs an answer into the input fields 1102 and 1104 in Fig. 11A. In response to receipt of input to an instruction section 1109 with the example 1107 of the answer being displayed, the example 1107 of the answer is input as text 1110 into the input fields 1102 and 1104 (refer to Fig. 11B).

In step S508, the application server 102 transmits, to the generative Al server 103, a prompt for generation of a brief based on the answer received in step S507.

In step S509, the generative Al server 103 generates a brief based on the received prompt by using the processing of the Al 1105 in the first role. In step S510, the generative Al server 103 transmits the generated brief to the application server 102. The web page information generation unit 316 of the application server 102 generates a web page including the brief. In step S511, the web page information transmission and reception unit 317 transmits the web page including the brief to the information processing apparatus 101.

In step S512, a received brief 1209 and a comment 1203 from an Al (Al creative director) 1201 in a second role are displayed on the display unit 208 of the information processing apparatus 101. In step S512, with the brief 1209 being displayed, a review button 1204 serving as an instruction section for receiving a review of the brief generated by the Al 1201 in the second role is displayed on the display unit 208. The Al 1201 in the second role has a role different the Al 1105 in the first role. The Al 1201 in the second role is a creative director that realizes the actual video representation including visuals and storytelling in a specific video production process. The creative director is also referred to as an integrated producer. The second role is set by transmitting, from the application server 102 to the Al server 103, a prompt including the name "creative director", a description of duties of the creative director, such as managing the quality of the video and other generated items or ensuring consistency between generated items based on an overall understanding of the project, expertise required of the creative director, such as refining generated items based on the purpose of the video, a function of the creative director, such as reviewing the quality of generated items or ensuring strategic consistency between generated items, or any combination thereof. Such a prompt may be transmitted in or prior to step S502.

As described above, according to the present embodiment, the user can check the brief generated by the Al 1105 in the first role and, based on the content of the brief, instructs whether to proceed with a review of the brief by the Al 1201 in the second role. By having review of the brief by the Al 1201 in the second role, diverse feedback is incorporated in generation of a brief. In the present embodiment, the Al 1201 in the second role, which corresponds to the creative director overseeing and managing the entire video generation process, reviews the quality of the content of the brief generated by the Al 1105 in the first role, which corresponds to the specialized role referred to as the strategist, or reviews the strategic consistency between the content and the purpose of the video. The review includes evaluating the quality and consistency and generating an improvement point based on the evaluation. The Al 1201 in the second role may oversee the entire processes of steps S401 to S406 in Fig. 4 and perform the review, or may oversee some of the processes in Fig. 4 (e.g., steps S402 to S404) and perform the review. By overseeing a plurality of the processes and performing the review, the review is performed from a viewpoint different from a viewpoint of the Al 1105 in the first role.

The user checks the brief 1209 generated by the Al 1105 in the first role and decides whether to request a review of the brief from the Al 1201 in the second role. If an improvement point 1205 for the brief is displayed regardless of an instruction to the review button 1204, the system load increases. However, the present embodiment does not perform the generation of the
improvement point 1205 for the brief by using the Al 1201 in the second role in a case where the user agrees to the content of the brief 1209, whereby the load of the system that generates the improvement point for the brief is reduced.

In Fig. 12A, the brief generated by the Al 1105 in the first role is displayed in the left area of the screen, and the comment 1203 from the Al 1201 in the second role and the review button 1204 are displayed in the right area of the screen. By dividing the display area, the content of the brief being reviewed is clearly displayed, and the user operating the review button 1204 can correctly recognize the item being reviewed. This reduces the occurrence of performing the review process on a wrong review target, whereby the overall processing load of the system performing the review process is reduced. In Fig. 12A, the size of the area in which the brief generated by the Al 1105 in the first role is displayed is larger than the size of the area in which the comment 1203 from the Al 1201 in the second role and the review button 1204 are displayed. This helps the user easily check the content of the brief.

An area 1212 in Fig. 12A presents the content of a plurality of generated items, and the underlined process ("Brief" in Fig. 12A) represents the content currently being generated.

In a case where an instruction to the review button 1204 is not received, the generation of the improvement point 1205 for the brief using the Al 1201 in the second role is not performed, and therefore, the display of the improvement point 1205 for the brief is also not performed. Thus, the load of the system that generates the improvement point for the brief is reduced. If the improvement point 1205 for the brief is displayed constantly regardless of an instruction to the review button 1204, the system load increases.

In Fig. 12A, the review button 1204 is positioned closer to the comment 1203 from the Al 1201 in the second role than to the comment from the Al 1105 in the first role. With this arrangement, the user operating the review button can intuitively recognize that a review request will be issued to the Al 1201 in the second role, which prevents issuing an incorrect review request to the Al 1105 in the first role by a user incorrectly recognized as a review target. This also reduces the overall processing load of the system in Fig. 1 performing the review process.

The review button 1204 is labeled "Ask for a review" (text requesting a review), which helps the user easily recognize that the review button 1204 is a button to request a review. This reduces incorrect use of the review button 1204, and the overall processing load of the system in Fig. 1 performing the review process is also reduced. The review button 1204 is a button (instruction section) that does not accept text input and is used to instruct a review, and in a case where the user clicks or taps the button (instruction section), a review instruction is issued.

In step S513, an instruction to the review button 1204 is received, and in step S514, the information processing apparatus 101 transmits a review instruction to the application server 102. In step S515, the application server 102 transmits a prompt for a review instruction to the generative Al server 103. The review instruction in step S515 is a predetermined prompt that instructs a review, whereby the processing load of the generative Al server 103 is reduced compared to a case in which an instruction is issued by text input.

In step S516, the improvement point 1205 for the brief is generated based on the review instruction by using the processing of the Al 1201 in the second role. In step S517, the generated improvement point 1205 for the brief is transmitted to the application server 102. The web page information generation unit 316 of the application server 102 generates a web page including the improvement point 1205 for the brief. In step S518, the web page information transmission and reception unit 317 transmits the web page including the improvement point 1205 for the brief to the information processing apparatus 101.

In step S519, the improvement point 1205 for the brief is displayed on the display unit 208 of the information processing apparatus 101.

In step S520, in a case where the improvement point 1205 displayed on the display unit 208 is to be entirely reflected in the brief, input to an apply button 1206 is received. In response to receipt of the input to the apply button 1206, the content of the brief is updated to reflect the improvement point 1205 in the brief. By disposing the apply button 1206 near the improvement point 1205, the user operating the apply button 1206 can recognize that the apply button 1206 is to apply the improvement point 1205, which helps the user correctly select a target for improvement. This reduces the processing of reflecting incorrect content, whereby the overall processing load of the system in Fig. 1 performing the improvement process is reduced.

The apply button 1206 is labeled "Apply improvements", which helps the user easily recognize that the apply button 1206 is a button to request an improvement. This reduces incorrect use of the apply button 1206, whereby the overall processing load of the system in Fig. 1 performing the improvement process is reduced.

In a case where part of the improvement point 1205 is to be reflected in the brief, the content to be reflected is described in an input field 1207, and in response to receipt of input to an update button 1208, the content of the brief is updated. A request may be input into the input field 1207 either before or after the instruction to the review button 1204. In a case where a request is input into the input field 1207 after the instruction to the review button 1204, the user can input the request by referring to the improvement point 1205, which helps the user request for diverse feedback that incorporates the feedback from the Al 1201 in the second role.

In response to receipt of the input to the apply button 1206 or entry of the description in the input field 1207 in step S520, the information processing apparatus 101 transmits an instruction to the application server 102 in step S521, and in step S522, the application server 102 transmits an instruction to the generative Al server 103. In step S523, the brief is updated based on the instruction. In step S524, the generative Al server 103 transmits the updated brief to the application server 102, and in step S525, the application server 102 transmits the updated brief to the information processing apparatus 101.

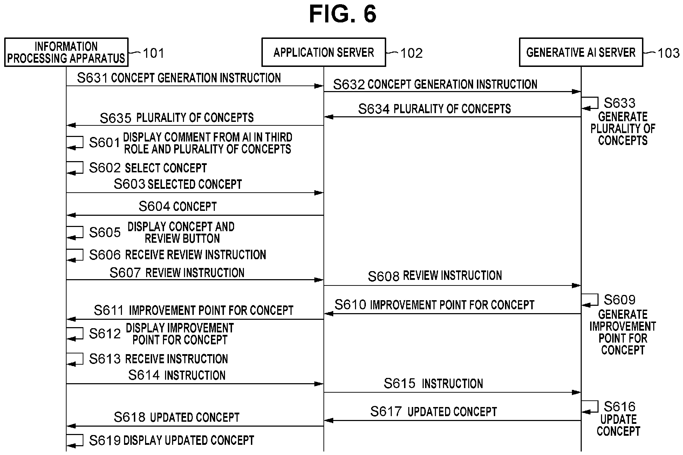

In step S526, the updated brief is displayed on the display unit 208 of the information processing apparatus 101. In a case where the user agrees to the content of the brief, input to the instruction section 1210 is received, and the processing proceeds to step S403, i.e., a sequence diagram illustrating concept generation in Fig. 6.

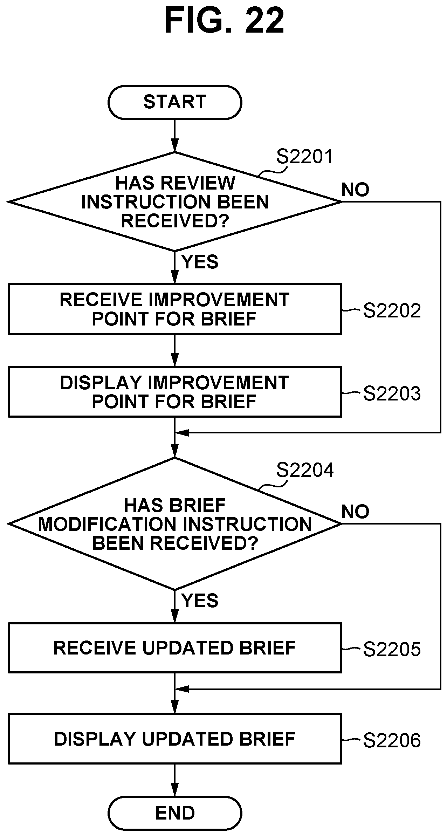

Fig. 22 is a flowchart illustrating a brief update process that is performed by the information processing apparatus 101. A control program for the flowchart in Fig. 22 is stored in the storage device 205 of the information processing apparatus 102, and the CPU 202 reads the control program into the RAM 204 and executes the read control program.

In step S2201, in a case where an instruction to the review button 1204 has been received (YES in step S2201), in step S2202, the information processing apparatus 101 transmits a review instruction to the application server 102 and receives the improvement point 1205 for the brief generated using the Al 1201 in the second role of the generative Al server 103.

In step S2203, the improvement point 1205 for the brief is displayed on the display unit 208 of the information processing apparatus 101. In step S2201, in a case where no instruction to the review button 1204 has been received (NO in step S2201), the generation of the improvement point 1205 for the brief using the Al 1201 in the second role is not performed, and therefore, the display of the improvement point 1205 for the brief is also not performed. Thus, the load of the system that generates the improvement point for the brief is reduced.

In step S2204, in a case where the improvement point 1205 displayed on the display unit 208 is to be entirely reflected in the brief, input to the apply button 1206 is received. In response to receipt of the input to the apply button 1206, the content of the brief is updated to reflect the improvement point 1205 in the brief. In a case where part of the improvement point 1205 is to be reflected in the brief, the content to be reflected is described in an input field 1207, and input to the update button 1208 is received, whereby the content of the brief is updated. In a case where the input to the apply button 1206 is received or the description is entered into the input field 1207 (YES in step S2204), in step S2205, the information processing apparatus 101 transmits a modification instruction to the application server 102 and receives the brief updated using the Al 1201 in the second role.

In step S2206, the updated brief is displayed on the display unit 208 of the information processing apparatus 101.

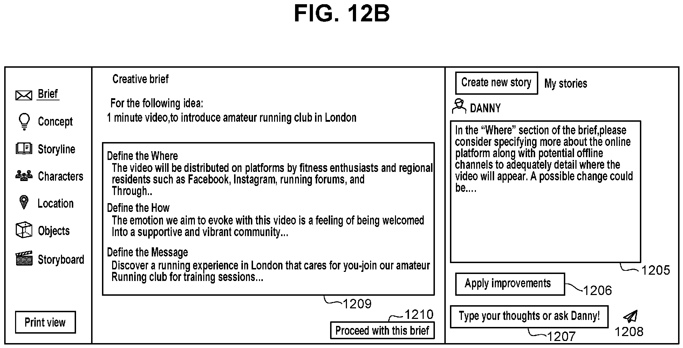

In a case where the user agrees to the content of the brief, input to the instruction section 1210 in Fig. 12B is received, and the processing proceeds to step S403.

Fig. 6 is a sequence diagram illustrating a processing procedure of the concept generation in step S403.

In step S631, based on the input to the instruction section 1210 in Fig. 12B, the information processing apparatus 101 transmits a concept generation instruction to the application server 102. In step S632, the application server 102 transmits a concept generation instruction to the generative Al server 103. In step S633, a plurality of concepts is generated based on the brief generated in step S402, and in step S634, the generative Al server 103 transmits the plurality of concepts to the application server 102. The web page information generation unit 316 of the application server 102 generates a web page including the plurality of concepts, and in step S635, the web page information transmission and reception unit 317 transmits the web page including the plurality of concepts to the information processing apparatus 101.

In step S601, a comment 1304 from an Al 1303 in a third role (copywriter) is displayed. The Al 1303 in the third role has a role different from the Al 1105 in the first role and the Al 1201 in the second role. The Al 1303 in the third role is responsible for determining, based on the brief generated by the Al 1105 in the first role and agreed by the user, words and phrases that resonate with audience watching the video as well as the tone and style of the video and presenting a concept of the video that includes a key element for building the story. In step S601, the plurality of concepts received in step S635 is displayed on the display unit 208.

Fig. 13 illustrates a first concept 1305 and a second concept 1306 among the plurality of (e.g., three) generated concepts. The third role is set by transmitting, from the application server 102 to the generative Al server 103, a prompt including the name "copywriter", a description of duties of the copywriter, such as generating a plurality of concepts, expertise required of the copywriter, a function of the copywriter, or any combination thereof. Such a prompt may be transmitted in or prior to step S632.

The copywriter that is the third role in the present embodiment is similar to the first role in that the copywriter corresponds to a specialized role, but differs from the second role responsible for overseeing and managing the entire process. As described above, different generative Als based on different prompts are used for the Al 1105 in the first role for use in generation of a brief in step S401 and the Al 1303 in the third role for use in generation of a concept in step S403. With this configuration, appropriate expertise is assigned to each stage of processing or project phase to perform individual processing, whereby output that meets the objective is acquired while the load of the generative Al server 103 is reduced.

In the present embodiment, the Al 1201 in the second role may be used to generate both a brief in step S401 and a concept in step S403. Since the Al 1201 in the second role corresponds to the creative director overseeing and managing the entire video generation process, the Al 1201 in the second role is able to take on a common role throughout the video generation process. This eliminates an increase in the number of Als for review at each stage of processing or project phase, whereby consistent output that meets the objective is obtained while the load of the generative Al server 103 is reduced.

A project herein refers to a plan and its execution for achievement of a specified goal and, in the present embodiment, may be all or part of the video generation designated by the user. Further, a project phase herein refers to a unit that divides the project into a plurality of parts and, in the present embodiment, may be a unit that divides tasks performed for video generation into a plurality of parts. For example, a project may refer to all or part of the process from receiving the type and length of the video and the message to be conveyed through the video (step S401) to generating a storyboard (step S406) in Fig. 4, and a project phase may refer to each of receiving the type of the video (step S401), generating a brief (step S402), generating a concept (step S403), generating a storyline (step S404), generating an image (step S405), and generating a storyboard (step S406). However, this is not a limitation.

In step S602, a concept is selected from the plurality of concepts displayed in step S601 in accordance with a user instruction. A concept is selected by selecting one of the plurality of instruction sections 1301 and 1302 in Fig. 13. In a case of selecting concept 1305 in Fig. 13, instruction section 1301 is selected. In a case of selecting concept 1306 in Fig. 13, instruction section 1302 is selected. In the present embodiment, concept 1306 is selected by selecting the instruction section 1302. In step S603, the information processing apparatus 101 transmits the selected concept to the application server 102.

In step S604, the concept is received, and in step S605, the concept and a comment 1403 from the Al (Al creative director) 1201 in the second role are displayed. In step S605, with the concept being displayed, the review button 1204 serving as an instruction section for receiving a review of the concept by the Al 1201 in the second role is displayed on the display unit 208.

In step S606, an instruction to the review button 1204 is received, and in step S607, the information processing apparatus 101 transmits a review instruction to the application server 102. In step S608, the application server 102 transmits a review instruction to the generative Al server 103. The review instruction in step S608 is a predetermined prompt that instructs a review, whereby the processing load of the generative Al server 103 is reduced compared to a case with an instruction by text input.

In step S609, an improvement point 1505 for the concept is generated based on the review instruction by using the processing of the Al 1201 in the second role. In step S610, the generated improvement point for the concept is transmitted to the application server 102. The web page information generation unit 316 of the application server 102 generates a web page including the improvement point for the concept. In step S611, the web page information transmission and reception unit 317 transmits the web page including the improvement point 1505 for the concept to the information processing apparatus 101.

In step S612, the improvement point 1505 for the concept is displayed on the display unit 208 of the information processing apparatus 101.

In step S613, in a case where the improvement point 1505 displayed on the display unit 208 is to be entirely reflected in the concept, input to an apply button is received. In response to receipt of the input to the apply button, the content of the concept is updated to reflect the improvement point 1505 in the concept. In a case where part of the improvement point 1505 is to be reflected in the concept, the content to be reflected is described in an input field 1506, and in response to receipt of input to an update button 1507, the content of the concept is updated. A request may be input into the input field 1506 either before or after the instruction to the review button 1204. In a case where a request is input into the input field 1506 after the instruction input to the review button 1204, the user can input the request by referring to the improvement point 1505, which helps the user request for diverse feedback that incorporates the feedback from the Al 1201 in the second role.

In response to receipt of the input to the apply button or entry of the description in the input field 1506 in step S613, the information processing apparatus 101 transmits an instruction to the application server 102 in step S614, and in step S615, the application server 102 transmits an instruction to the generative Al server 103. In step S616, the concept is updated based on the instruction. In step S617, the generative Al server 103 transmits the updated concept to the application server 102, and in step S618, the application server 102 transmits the updated concept to the information processing apparatus 101.

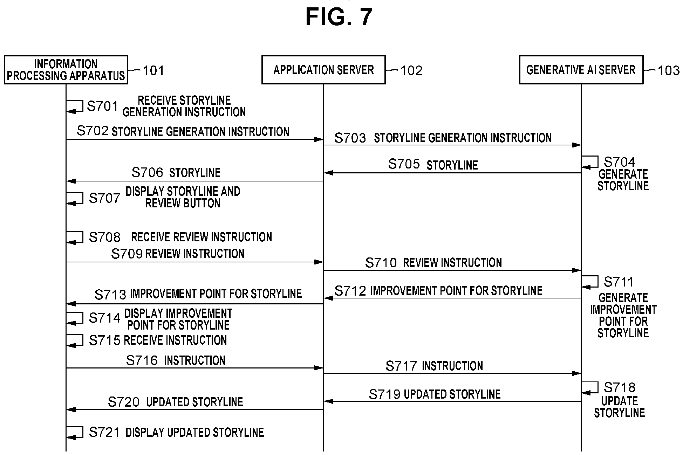

In step S619, the updated concept is displayed on the display unit 208 of the information processing apparatus 101. In a case where the user agrees to the content of the concept, input to the instruction section 1501 in Fig. 15 is received, and the processing proceeds to step S404, i.e., a sequence diagram illustrating storyline generation in Fig. 7.

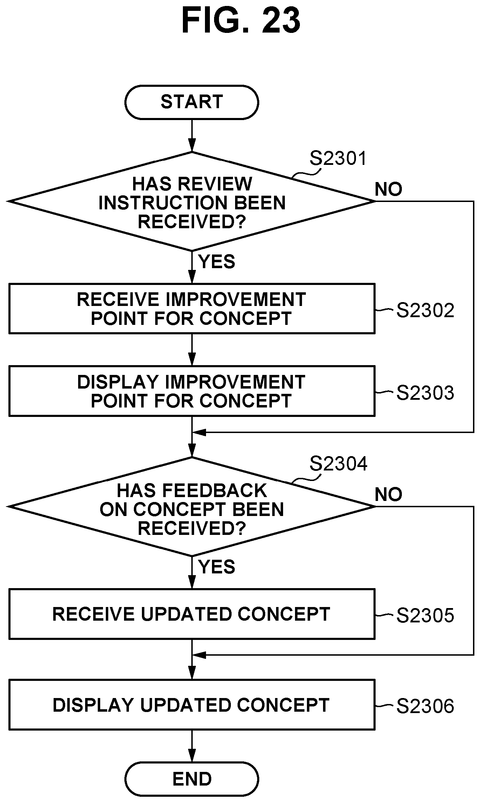

Fig. 23 is a flowchart illustrating a concept update process that is performed by the information processing apparatus 101. A control program for the flowchart in Fig. 23 is stored in the storage device 205 of the information processing apparatus 102, and the CPU 202 reads the control program into the RAM 204 and executes the read control program.

In step S2301, in a case where an instruction to the review button 1204 has been received (YES in step S2301), in step S2302, the information processing apparatus 101 transmits a review instruction to the application server 102 and receives the improvement point 1505 for the concept generated using the Al 1201 in the second role of the generative Al server 103.

In step S2303, the improvement point 1505 for the concept is displayed on the display unit 208 of the information processing apparatus 101. In step S2301, in a case where no instruction to the review button 1204 has been received (NO in step S2301), the generation of the improvement point 1505 for the concept using the Al 1201 in the second role is not performed, and therefore, the display of the improvement point 1505 for the concept is also not performed.

In step S2304, in a case where the improvement point 1505 displayed on the display unit 208 is to be entirely reflected in the concept, input to the apply button is received. In response to receipt of the input on the apply button is received, the content of the concept is updated to reflect the improvement point 1505 in the concept. In a case where part of the improvement point 1505 is to be reflected in the concept, the content to be reflected is described in the input field 1506, and input to the update button 1507 is received, whereby the content of the concept is updated. In a case where the input to the apply button is received or the description is entered into the input field 1506 (YES in step S2304), in step S2305, the information processing apparatus 101 transmits a modification instruction to the application server 102 and receives the concept updated using the Al 1201 in the second role.

In step S2306, the updated concept is displayed on the display unit 208 of the information processing apparatus 101.

Fig. 7 is a sequence diagram illustrating a processing procedure of the storyline generation in step S404.

In step S701, in response to receipt of input to the instruction section 1501, a storyline generation instruction is received. In step S702, the information processing apparatus 101 transmits a storyline generation instruction to the application server 102, and in step S703, the application server 102 transmits a storyline generation instruction to the generative Al server 103.

In step S704, the generative Al server 103 generates a storyline. In step S705, the generative Al server 103 transmits the generated storyline to the application server 102. In step S706, the application server 102 transmits the storyline to the information processing apparatus 101.

In step S707, the received storyline is displayed on the display unit 208. Fig. 16 illustrates a storyline displayed in step S707.

In step S707, with the storyline being displayed, the review button 1204 serving as an instruction section for receiving a review of the storyline generated by the Al 1201 in the second role is displayed on the display unit 208.

In step S708, an instruction to the review button 1204 is received, and in step S709, the information processing apparatus 101 transmits a review instruction to the application server 102. In step S710, the application server 102 transmits a review instruction to the generative Al server 103. The review instruction in step S710 is a predetermined prompt that instructs a review, whereby the processing load of the generative Al server 103 is reduced compared to a case with an instruction by text input.

In step S711, an improvement point for the storyline is generated based on the review instruction by using the processing of the Al 1201 in the second role. In step S712, the generated improvement point for the storyline is transmitted to the application server 102. The web page information generation unit 316 of the application server 102 generates a web page including the improvement point for the storyline. In step S713, the web page information transmission and reception unit 317 transmits the web page including the improvement point for the storyline to the information processing apparatus 101.

In step S714, the improvement point for the storyline is displayed on the display unit 208 of the information processing apparatus 101.

In step S715, in a case where the improvement point displayed on the display unit 208 is to be entirely reflected in the storyline, input to an apply button is received. In response to receipt of the input to the apply button, the content of the storyline is updated to reflect the improvement point in the storyline. In a case where part of the improvement point is to be reflected in the storyline, the content to be reflected is described in an input field 1601, and in response to input to an update button 1602, the content of the storyline is updated. A request may be input into the input field 1601 either before or after the instruction to the review button 1204. In a case where a request is input into the input field 1601 after the instruction to the review button 1204, the user can input the request by referring to the improvement point, which helps the user request for diverse feedback that incorporates the feedback from the Al 1201 in the second role.

In response to receipt of the input to the apply button or entry of the description in the input field 1601 in step S715, the information processing apparatus 101 transmits an instruction to the application server 102 in step S716. In step S717, the application server 102 transmits an instruction to the generative Al server 103. In step S718, the storyline is updated based on the instruction. In step S719, the generative Al server 103 transmits the updated storyline to the application server 102, and in step S720, the application server 102 transmits the updated storyline to the information processing apparatus 101.

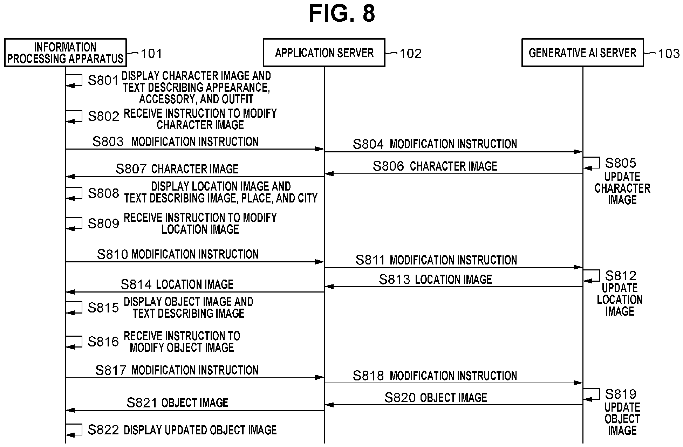

In step S721, the updated storyline is displayed on the display unit 208 of the information processing apparatus 101. In a case where the user agrees to the content of the storyline, input to the instruction section 1603 is received, and the processing proceeds to step S405, i.e., a sequence diagram illustrating image generation in Fig. 8.

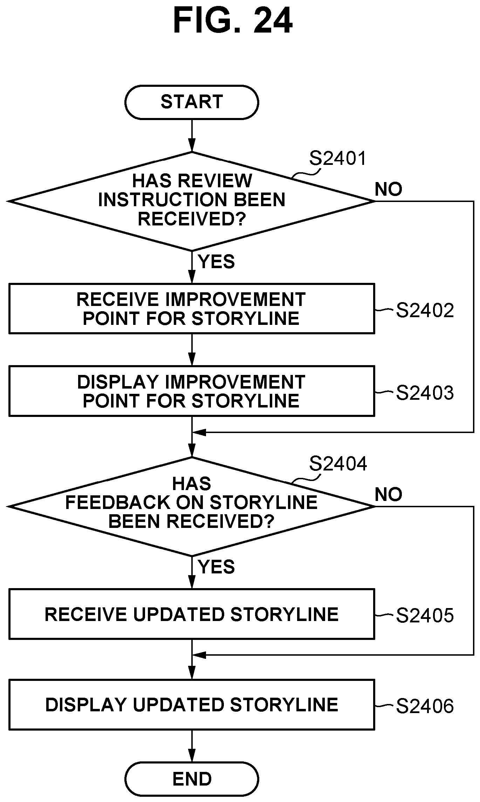

Fig. 24 is a flowchart illustrating a storyline update process that is performed by the information processing apparatus 101. A control program for the flowchart in Fig. 24 is stored in the storage device 205 of the information processing apparatus 101, and the CPU 202 reads the control program into the RAM 204 and executes the read control program.

In step S2401, in a case where an instruction to the review button 1204 is received (YES in step S2401), in step S2402, the information processing apparatus 101 transmits a review instruction to the application server 102 and receives the improvement point for the storyline generated using the Al 1201 in the second role of the generative Al server 103.

In step S2403, the improvement point for the storyline is displayed on the display unit 208 of the information processing apparatus 101. In step S2401, in a case where no instruction to the review button 1204 has been received (NO in step S2401), the generation of the improvement point for the storyline using the Al 1201 in the second role is not performed, and therefore, the display of the improvement point for the storyline is also not performed.

In step S2404, in a case where the improvement point displayed on the display unit 208 is to be entirely reflected in the storyline, input to the apply button is received. In response to receipt of the input on the apply button is received, the content of the storyline is updated to reflect the improvement point in the storyline. In a case where part of the improvement point is to be reflected in the storyline, the content to be reflected is described in the input field 1601, and in response to receipt of input to the update button 1602, the content of the storyline is updated. In a case where the input to the apply button is received or the description is entered into the input field 1601 (YES in step S2404), in step S2405, the information processing apparatus 101 transmits a modification instruction to the application server 102 and receives the storyline updated using the Al 1201 in the second role.

In step S2406, the updated storyline is displayed on the display unit 208 of the information processing apparatus 101.

Fig. 8 is a sequence diagram illustrating a processing procedure of the image generation in step S405.

In step S801, the display unit 208 displays a character image 1701 to be used in the storyboard along with text 1702 describing the age, gender, appearance, accessory, outfit, and image type (such as colored image or line drawing) of the character, as illustrated in Fig. 17. In step S802, content to modify the text 1702 describing the age, gender, appearance, accessory, outfit, and image type (such as colored image or line drawing) of the character is input, and input to an update button 1703 is received. In step S803, the information processing apparatus 101 transmits a modification instruction to the application server 102. In step S804, the application server 102 transmits a modification instruction to the generative Al server 103, and in step S805, the character image is updated based on the instruction. In step S806, the generative Al server 103 transmits the updated character image to the application server 102, and in step S807, the application server 102 transmits the updated character image to the information processing apparatus 101.

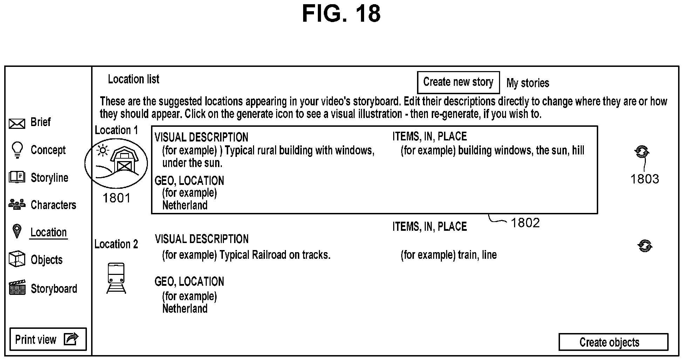

In step S808, a location image 1801 to be used in the storyboard and text 1802 describing the location image, place, or city are displayed on the display unit 208, as illustrated in Fig. 18. In step S809, content to modify the text 1802 describing the location image, place, or city is input, and input to an update button 1803 is received. In step S810, the information processing apparatus 101 transmits a modification instruction to the application server 102. In step S811, the application server 102 transmits a modification instruction to the generative Al server 103, and in step S812, the location image is updated based on the instruction. In step S813, the generative Al server 103 transmits the updated location image to the application server 102, and in step S814, the application server 102 transmits the updated location image to the information processing apparatus 101.

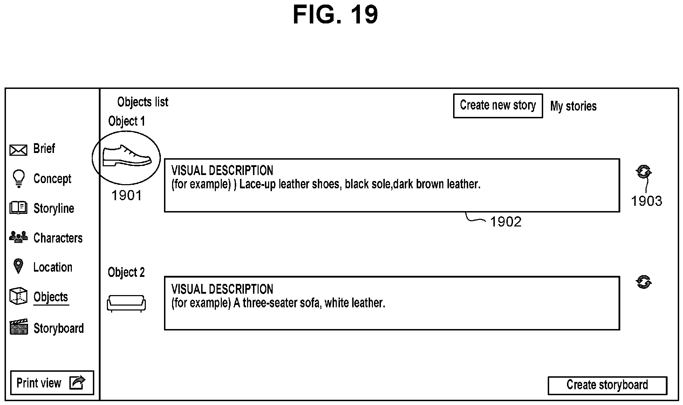

In step S815, an object image 1901 to be used in the storyboard and text 1902 describing the object image are displayed on the display unit 208, as illustrated in Fig. 19. In step S816, content to modify the text 1902 describing the object image is input, and input to an update button 1903 is received. In step S817, the information processing apparatus 101 transmits a modification instruction to the application server 102. In step S818, the application server 102 transmits a modification instruction to the generative Al server 103, and in step S819, the object image is updated based on the instruction. In step S820, the generative Al server 103 transmits the updated character image to the application server 102, and in step S821, the application server 102 transmits the updated object image to the information processing apparatus 101. In step S822, the updated object image is displayed on the display unit 208.

The review button 1204 illustrated in Fig. 12A may be disposed on the screens illustrated in Figs. 17, 18, and 19, and a request to review the character image 1701, the location image 1801, and/or the object image 1901 may be issued to the Al 1201 in the second role, based on an instruction to the review button 1204.

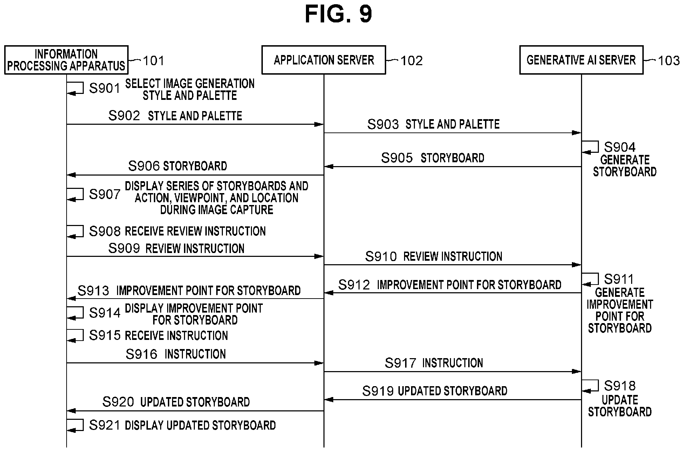

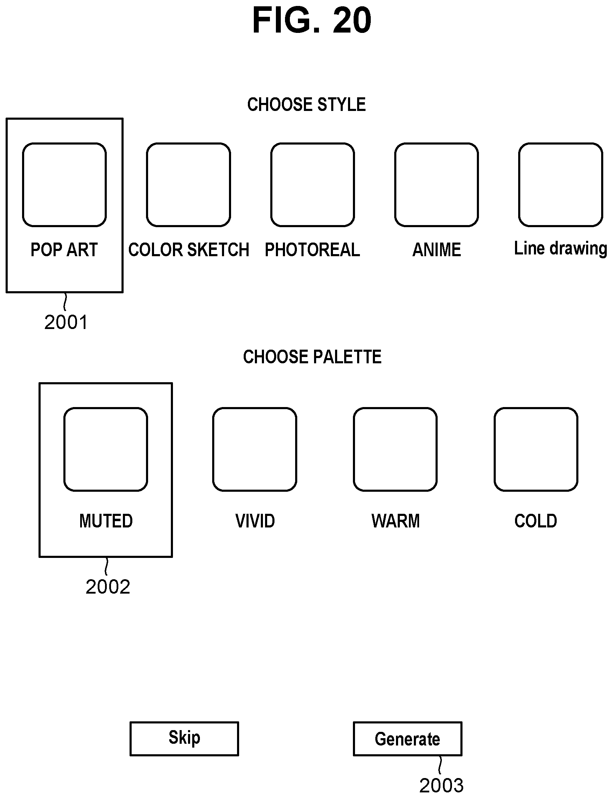

Fig. 9 is a sequence diagram illustrating a processing procedure of the storyboard generation in step S406. In step S901, an image generation style 2001 and a palette 2002 illustrated in Fig. 20 are selected. The image generation style is selected from, for example, POP ART, COLOR SKETCH, PHOTOREAL, or ANIME. The palette is selected from, for example, MUTED, VIVID, WARM, or COLD. The image generation style may be selected from uncolored line drawings. In a case where input to an instruction section 2003 in Fig. 20 is received, the processing proceeds to step S902.

In step S902, the information processing apparatus 101 transmits the style and the palette to the application server 102, and in step S903, the application server 102 transmits a prompt for generation of a storyboard based on the style and the palette to the generative Al server 103.

In step S904, the generative Al server 103 generates a storyboard. In step S905, the generative Al server 103 transmits the generated storyboard to the application server 102. In step S906, the application server 102 transmits the storyboard to the information processing apparatus 101.

In step S907, a series of storyboards 2101 to 2103 is displayed, as illustrated in Fig. 21. An action, viewpoint, and location 2104 in image capture are also displayed in step S907. Actions in image capture include a long shot that captures the entire subject, a full shot in which the subject fills the entire screen, a medium shot for expressing movement in detail, a close-up shot that shows a part of the subject, especially the face or hands, in close-up, and an extreme close-up shot that captures a specific part of the subject from very close. Actions in image capture further include an over-the-shoulder shot that captures one person from over the shoulder of another person in a scene where a plurality of persons is present and a bird's-eye view shot that captures an image from directly above to have a bird's-eye view of the entire scene.

In step S908, an instruction to a review button is received, and in step S909, the information processing apparatus 101 transmits a review instruction to the application server 102. In step S910, the application server 102 transmits a review instruction to the generative Al server 103. In step S911, an improvement point for the storyboard is generated based on the review instruction by using the Al 1201 in the second role. In step S912, the generated improvement point for the storyboard is transmitted to the application server 102. The web page information generation unit 316 of the application server 102 generates a web page including the improvement point for the storyboard, and in step S913, the web page information transmission and reception unit 317 transmits the web page including the improvement point for the storyboard to the information processing apparatus 101.

In step S914, the improvement point for the storyboard is displayed on the display unit 208 of the information processing apparatus 101.

In step S915, content to modify the action, viewpoint, and location 2104 in image capture is input, and input to an update button 2105 is received. In step S916, the information processing apparatus 101 transmits an update instruction based on the input content for modification to the application server 102. In step S917, the application server 102 transmits an instruction to the generative Al server 103.

In step S918, the storyboard is updated based on the instruction. In step S919, the generative Al server 103 transmits the updated storyboard to the application server 102, and in step S920, the application server 102 transmits the updated storyboard to the information processing apparatus 101.

In step S921, the updated storyboard is displayed on the display unit 208 of the information processing apparatus 101. As a result of these processes, a plurality of storyboards is completed.

In the storyboard generation, the review button for receiving a review instruction in step S908 is an option, and configurations where the review button or the improvement point for the storyboard is not displayed are also included within the scope of the present embodiment.

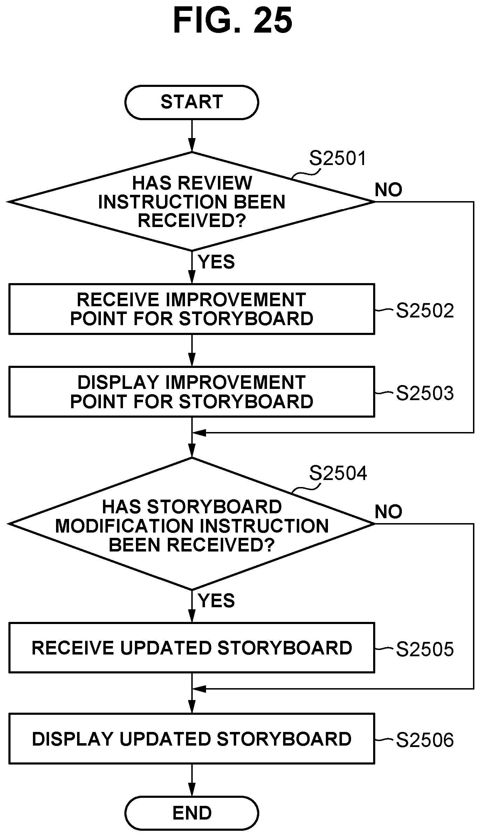

Fig. 25 is a flowchart illustrating a storyboard update process that is performed by the information processing apparatus 101. A control program for the flowchart in Fig. 25 is stored in the storage device 205 of the information processing apparatus 102, and the CPU 202 reads the control program into the RAM 204 and executes the read control program.

In step S2501, in a case where an instruction to the review button is received (YES in step S2501), in step S2502, the information processing apparatus 101 transmits a review instruction to the application server 102 and receives the improvement point for the storyboard generated using the Al 1201 in the second role of the generative Al server 103.

In step S2503, the improvement point for the storyboard is displayed on the display unit 208 of the information processing apparatus 101. In step S2501, in a case where no instruction to the review button has been received (NO in step S2501), the generation of the improvement point for the storyboard using the Al 1201 in the second role is not performed, and therefore, the display of the improvement point for the storyboard is also not performed.

In step S2504, in a case where the content to modify the action, viewpoint, and location 2104 in image capture is input and input to the update button 2105 is received, the content of the storyboard is updated to reflect the improvement point in the storyboard. In a case where input to the update button 2105 is received (YES in step S2504), in step S2505, the information processing apparatus 101 transmits a modification instruction to the application server 102 and receives the storyboard updated using the Al 1201 in the second role.

In step S2506, the updated storyboard is displayed on the display unit 208 of the information processing apparatus 101.

While the present embodiment describes the storyboard generation process with reference to the flowchart in Fig. 4, only part of the process in Fig. 4 may be performed without performing the entire process in Fig. 4. For example, steps S401 and S402 may be performed to generate a brief of the video, or steps S401 to S403 may be performed to generate a concept of the video. Further, steps S401 to S404 may be performed to generate a storyline of the video.

While the present embodiment describes the configuration illustrated in Fig. 1 in which the information processing apparatus 101, the application server 102, and the generative server 103 are connected via the networks, the information processing apparatus 101 may store the programs (Fig. 3B) stored in the application server 102 and perform the flowcharts illustrated in Figs. 4 to 9 without using the application server 102. In this case, the information processing apparatus 101 and the generative Al server 103 communicate directly with each other via a network.

While the present embodiment describes an example of using the generative Al server 103, a look-up table (LUT) may be stored in the storage device 215 of the application server 102, and each process may be performed using the LUT without using the generative Al server 103. For example, an LUT with information about video generation as the input and a question as the output may be used in step S502 in Fig. 5, or an LUT with an answer to a question as the input and a brief as the output may be used in step S505 in Fig. 5. In a case where each process is performed using an LUT, the application server 102 includes the brief generation unit 311, the concept generation unit 312, the storyline generation unit 313, the image generation unit 314, and the storyboard generation unit 315, as illustrated in Fig. 3D.

In a case of using an LUT, the number of input and output patterns is limited. On the other hand, in a case where the generative Al server 103 is used, since more input and output patterns are supported in comparison with the case using an LUT, whereby high-precision output is generated for a given input.

In the present embodiment, information generated by the process with the first role is checked, and whether to perform a review of the information by the process with the second role is instructed based on the content of the information. By performing a review of the information by the second role, diverse feedback is incorporated in generation of information. In a case where the user agrees to the information generated by the process with the first role, no review of the information by the second role is performed, whereby the overall processing load of the system is reduced.

By disposing the review button 1204 near the comment 1203 from the Al 1201 in the second role, the user operating the review button can recognize that a review request will be issued to the Al 1201 in the second role, which helps the user correctly select a target for review. This reduces the occurrence of performing the review process on a wrong review target, whereby the overall processing load of the system performing the review process is reduced.

Since the review button 1204 is labeled "Ask for a review" (text requesting a review), the user can easily recognize that the review button 1204 is a button for requesting a review. This reduces incorrect use of the review button 1204, and the overall processing load of the system performing the review process is also reduced.

The present invention may also be realized by supplying a program that implements one or more functions of the above-described embodiment to a system or an apparatus via a network or a storage medium, and having a computer of the system or the apparatus to read and execute the program. The computer may have one or more processors or circuits and may include a network of multiple separate computers or multiple separate processors or circuits to read and execute computer-executable instructions.

The processor or circuit may include a central processing unit (CPU), a microprocessor unit (MPU), a graphics processing unit (GPU), an application-specific integrated circuit (ASIC), or a field-programmable gate array (FPGA). The processor or circuit may include a digital signal processor (DSP), a data flow processor (DFP), or a neural processing unit (NPU).

Various embodiments have been described in detail above but it will be understood that the present invention is not limited to these embodiments and encompasses all modifications, variants, alternatives and equivalents falling within the scope of the appended claims.

## Claims

1. An information processing system comprising:
an information processing apparatus; and
a server apparatus,
wherein the server apparatus includes transmission means for transmitting, to the information processing apparatus, information for video production generated using a first process in a first role,
wherein the information processing apparatus includes display control means for displaying the information for video production on a display unit,
wherein on the display unit, the display control means displays an instruction section that does not receive text input from a user but receives a review of the information for video production, with the information for video production being displayed on the display unit, the review being generated by a second process in a second role, and
wherein on the display unit, the display control means displays an improvement point for the information for video production generated using the second process in the second role and the information for video production, based on an instruction to the instruction section.

2. The information processing system according to claim 1, wherein the instruction section is disposed closer to a comment from the second role than to a comment from the first role.

3. The information processing system according to claim 1 or 2, wherein in a case where the instruction to the instruction section is not received, the display control means neither generates the improvement point nor displays the improvement point on the display unit.

4. The information processing system according to any one of claims 1 to 3, wherein the instruction section is labeled with text requesting a review.

5. The information processing system according to any one of claims 1 to 4,
wherein with the improvement point being displayed on the display unit, the display control means displays an instruction section for receiving an instruction to reflect the improvement point on the display unit, and
wherein information that has reflected the improvement point generated based on input to the instruction section is displayed on the display unit.

6. The information processing system according to any one of claims 1 to 5, wherein the instruction section that receives input to reflect the improvement point is disposed near the improvement point.

7. The information processing system according to any one of claims 1 to 6, wherein with the information for video production and the improvement point being displayed on the display unit, the display control means displays an acceptance unit that receives feedback on the information for video production on the display unit.

8. The information processing system according to any one of claims 1 to 7,
wherein the information processing apparatus further includes reception means for receiving a video type, and
wherein the information for video production is information generated based on the video type.

9. The information processing system according to any one of claims 1 to 8, wherein the reception means is configured to receive an image through drag-and-drop of the image.

10. An information processing system that generates information for video production, comprising:
an information processing apparatus;
and a server apparatus,
wherein the information processing apparatus includes
reception means for receiving a video type, and
first transmission means for transmitting the video type received by the reception means to the server apparatus,
wherein the server apparatus includes receiving means for receiving a document generated based on the video type by using an artificial intelligence (AI) in a first role,
wherein the information processing apparatus further includes display control means for displaying the document on a display unit,
wherein on the display unit, the display control means displays an instruction section for receiving a review of the document generated by an Al in a second role, and
wherein with the document being displayed on the display unit, an improvement point for the document generated using the Al in the second role is displayed on the display unit, based on an instruction to the instruction section.

11. A system that generates a document for video production, comprising:
an information processing apparatus; and
a server apparatus,
wherein the server apparatus includes receiving means for receiving a document generated using an Al in a first role,
wherein the information processing apparatus includes display control means for displaying the document on a display unit, and
wherein the display control means displays, on the display unit, the document and an instruction section for receiving a review of the document by an Al in a second role, and displays, on the display unit, an improvement point for the document generated using the Al in the second role based on an instruction to the instruction section and an instruction section for reflecting the improvement point in the document.

12. A method for controlling an information processing apparatus configured to communicate with a server apparatus, the method comprising:
an acceptance step of receiving information about video generation;
a transmission step of transmitting the information about video generation received in the acceptance step to the server apparatus; and
a display control step of displaying, on a display unit, information for video production generated using a first information process in a first role based on the information about video generation,
wherein with the information for video production being displayed on the display unit, the display control step displays, on the display unit, an instruction section that does not receive text input from a user but receives a review of the information for video production generated by a second process in a second role, and displays, on the display unit, an improvement point for the information for video production generated using a second information process with the second role, based on an instruction to the instruction section.

13. The information processing system according to claim 12, wherein the instruction section is disposed closer to a comment from the second role than to a comment from the first role.

14. The information processing system according to claim 12 or 13,
wherein with the improvement point being displayed on the display unit, the display control means displays an instruction section for receiving an instruction to reflect the improvement point on the display unit, and
wherein information that has reflected the improvement point generated based on input to the instruction section is displayed on the display unit.

15. A method for controlling an information processing system including an information processing apparatus and a server apparatus, the method comprising:
executing a transmission step by the server apparatus to transmit information for video production generated using a first information process in a first role to the information processing apparatus,
executing a display control step by the information processing apparatus to display the information for video production on a display unit,
wherein in the display control step, with the information for video production being displayed on the display unit, the information processing apparatus displays, on the display unit, an instruction section that does not receive text input from a user but receives a review of the information for video production by a second process in a second role, and
wherein in the display control step, the information processing apparatus displays, on the display unit, an improvement point for the information for video production generated using a second information process in the second role and the information for video production, based on an instruction to the instruction section.

## Amended claims

### Amended claims in accordance with Rule 137(2) EPC.

1. A server apparatus (102) for use in video production, the video production comprising a plurality of processes including a first process that generates first video production information, and a second process that generates second video production information based on the generated first video production information, the server apparatus (102) comprising:
instructing means configured to instruct an Al server to generate the first video production information using an Al in a first role;
first generating means configured to generate first display data including the first video production information received from the Al server, the first display data including a review instruction section that does not receive text input from a user but is configured to receive an instruction for reviewing the first video production information;
first transmitting means configured to transmit the generated first display data to an information processing apparatus (101);
second transmitting means configured to transmit, to the Al server, prompt information based on the instruction input to the review instruction section, the instruction having been received from the information processing apparatus (101);
second generating means configured to generate second display data from an improvement point of the first video production information, the improvement point generated using an Al in a second role in response to the prompt information, the second role being different from the first role, and the Al in the second role being configured to review the first video production information by overseeing a plurality of processes including the first process and the second process;
third transmitting means configured to transmit, to the information processing apparatus (101), the second display data generated by the second generating means;
wherein the instructing means instructs the Al server to perform the second process in response to an instruction for performing the second process received from the information processing apparatus (101).

2. The server apparatus according to claim 1, wherein the review instruction section is disposed closer to a comment from the Al in the second role than to a comment from the Al in the first role.

3. The server apparatus according to claim 1 or 2, wherein in a case where the instruction to the review instruction section is not received and the instructing means instructs the Al server to perform the second process, the second generating means does not generate the second display data.

4. The server apparatus according to any one of claims 1 to 3, wherein the review instruction section is labeled with text requesting a review.

5. The server apparatus according to any one of claims 1 to 4,
wherein the second display data includes a reflection instruction section configured to receive an instruction to apply the improvement point to the first video production information displayed on the display unit, and
wherein the server apparatus (102) further comprises fourth transmitting means configured to transmit, to the information processing apparatus (101) third display data including updated first video production information that has reflected the improvement point .

6. The server apparatus (102) according to claim 5, wherein the reflection instruction section is disposed near the improvement point.

7. The server apparatus (102) according to any one of claims 1 to 6, wherein the first display data includes an acceptance section that is configured to receive feedback on the first video production information.

8. The server apparatus according to any one of claims 1 to 7,
wherein the first video production information is information generated based on the video type having been received from the information processing apparatus.

9. The server apparatus (102) according to any one of claims 1 to 8, wherein the first role is a strategist, and the second role is a creative director.

10. The server apparatus (102) according to any one of claims 1 to 9, wherein the plurality of processes include at least two of brief generating, concept generating, storyline generating, image generating and storyboard generating.

11. The server apparatus (102) according to any one of claims 1 to 10, wherein the first display data is a first web page, and the second display data is a second web page.

12. The server apparatus (102) according to any one of claims 1 to 11, wherein the first display data includes a proceed instruction section configured to receive the instruction for performing the second process as input.

13. An information processing system for use in video production, the video production comprising a plurality of video production processes including a first process that generates first video production information, and a second process that generates second video production information based on the generated first video production information, the information processing system comprising:
an information processing apparatus (101); and
a server apparatus (102), wherein the server apparatus includes:
transmission means for transmitting, to the information processing apparatus, the first video production information and the second video production information,
instructing means for instructing an Al server to generate the first video production information using an Al in a first role and instructing the Al server to generate an improvement point of the first video production information using an Al in a second role, the second role being different from the first role;
wherein the information processing apparatus (101) includes display control means for displaying the first video production information and the second video production information on a display unit,
wherein on the display unit, the display control means displays, while the first video production information is being displayed:
a proceed instruction section configured to receive an instruction to perform the second process, wherein in response to the instruction the instructing means instructs the Al server to perform the second process, and
a review instruction section that does not receive text input from a user but is configured to receive an instruction for reviewing the first video production information without displaying the second video production information, wherein, in response to the instruction the instructing means instructs the Al server to generate the improvement point of the first video production information using an Al in the second role, the Al in the second role being configured to review video production information by overseeing a plurality of processes including the first process and the second process; and
wherein on the display unit, the display control means displays the improvement point.

14. A method for controlling an information processing system for use in video production, the video production comprising a plurality of video production processes including a first process that generates first video production information, and a second process that generates second video production information based on the generated first video production information, the information processing system including an information processing apparatus and a server apparatus, the method comprising:
executing a transmission step by the server apparatus to transmit, to the information processing apparatus, the first video production information and the second video production information , and
instructing an Al server to generate the first video production information using an Al in a first role and instructing the Al server to generate an improvement point of the first video production information using an Al in a second role, the second role being different from the first role; and
executing a display control step by the information processing apparatus to display the first video production information and the second video production on a display unit,
wherein in the display control step, while the first video production information being displayed on the display unit, the information processing apparatus displays, on the display unit:
a proceed instruction section configured to receive an instruction to perform the second process, wherein in response to the instruction, the Al server is instructed to perform the second process, and
a review instruction section that does not receive text input from a user but is configured to receive an instruction for reviewing the first video production information without displaying the second video production information,
in response to the instruction for reviewing, instructing the Al server to generate the improvement point of the first video production information using the Al in the second role, the Al in the second role being configured to review video production information by overseeing a plurality of processes including the first process and the second process; and
wherein in the display control step, the information processing apparatus displays, on the display unit, the improvement point.

15. A method for controlling a server apparatus for use in video production, the video production comprising a plurality of processes including a first process that generates first video production information, and a second process that generates second video production information based on the generated first video production information, the method comprising:
instructing an Al server to generate the first video production information using an Al in a I first role;
generating first display data including the first video production information received from the Al server, the first display data including a review instruction section that does not receive text input from a user but is configured to receive an instruction for reviewing the first video production information;
transmitting the generated first display data to an information processing apparatus;
transmitting, to the Al server, prompt information based on the instruction input to the review instruction section, the instruction having been received from the information processing apparatus;
generating second display data from an improvement point of the first video production information, the improvement point generated using an Al in a second role in response to the prompt information, the second role being different from the first role, and the Al in the second role being configured to review the first video production information by overseeing a plurality of processes including the first process and the second process;
transmitting, to the information processing apparatus, the generated second display data; and
instructing the Al server to perform the second process in response to an instruction for performing the second process received from the information processing apparatus.

16. A computer program comprising instructions which, when the program is executed by a computer, cause the computer to carry out the method of claim 15.
